(19) Europäisches Patentamt
European Patent Office
Office européen des brevets

(11) **EP 4 545 979 A1**

(12) **EUROPEAN PATENT APPLICATION**

(43) Date of publication:
**30.04.2025 Bulletin 2025/18**

(21) Application number: **23206296.8**

(22) Date of filing: **27.10.2023**

(51) International Patent Classification (IPC):
***G01P 3/52*** (2006.01)     ***G01P 3/50*** (2006.01)
***G01L 1/12*** (2006.01)     ***G01N 27/72*** (2006.01)

(52) Cooperative Patent Classification (CPC):
**G01P 3/52;** G01N 27/72

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Sandvik Mining and Construction Oy
33330 Tampere (FI)**

(72) Inventor: **Keskiniva, Markku
33330 Tampere (FI)**

(74) Representative: **Sandvik
Sandvik Mining and Construction Oy
Patent Department
PL 100
33311 Tampere (FI)**

Remarks:
A request for correction of the drawings has been filed pursuant to Rule 139 EPC. A decision on the request will be taken during the proceedings before the Examining Division (Guidelines for Examination in the EPO, A-V, 3.).

(54) **ARRANGEMENT AND METHOD FOR SENSING TANGENTIAL VELOCITY OF AN OBJECT**

(57)     An arrangement and method of sensing tangential velocity of surface of an object. The arrangement comprises a sensor (S) at a sensing point (SP) for measuring the tangential velocity at least in one sensing direction (SD). The sensor comprises a magnetizing element (10), a sensing element and a sensing gap (SG). The sensing element comprises one or more sensing wires (6) which are arranged to the sensing gap in transverse direction relative to the sensing direction. The magnetizing element generates a magnetic field (2) so that line of flux passes through the sensing gap. Electric voltage is induced to the sensing wire when the object moves. The object is made of hysteric ferromagnetic material and when a rapid change in movement of the object occurs, then the magnetic field deflects due to hysteresis causing thereby induction of the electric voltage. The sensed electric voltage is directly proportional to the tangential velocity.

FIG. 2

EP 4 545 979 A1

## Description

## Background of the invention

The invention relates to an arrangement for sensing at a sensing point tangential velocity of a surface of an object to be measured.

The invention further relates to a rock drilling unit provided with the disclosed arrangement and to a method for sensing tangential velocity of a surface of an object.

The field of the invention is defined more specifically in the preambles of the independent claims.

There is a continuing need in different technical areas to measure velocities of surfaces of different technical components and pieces. Contactless sensing devices are preferred in many applications because mounting of fixed sensors is difficult and sometimes even impossible. Therefore different contactless devices based on measurements of sound, light waves and magnetism are disclosed. However, the known sensing techniques have shown operational limitations and lack in reliability, especially when rapid movements and phenomenon are examined. Thereby, no satisfying solution is available for contactless sensing of velocities of surfaces of different components and pieces.

## Brief description of the invention

An object of the invention is to provide a novel and improved arrangement and method for contactless sensing of tangential velocity. A further object is to provide a rock drilling unit implementing the disclosed arrangement.

The arrangement according to the invention is characterized by the characterizing features of the first independent apparatus claim.

The rock drilling unit according to the invention is characterized by the characterizing features of the second independent apparatus claim.

The method according to the invention is characterized by the characterizing features of the independent method claim.

An idea of the disclosed solution is that tangential velocity of a surface of an examined object is sensed by means of one or more contactless sensors detecting movements in a magnetic field between the sensor and the measured object. The solution utilizes magnetism, movement of magnetic field, electromagnetic induction and hysteresis of material of the measured object.

The disclosed solution relates especially to an arrangement comprising at a sensing point one or more sensors for measuring the tangential velocity in one or more sensing directions. The sensor comprises one or more magnetizing elements and one or more sensing elements which are contactless in relation to the object. The magnetizing elements and the sensing elements are immovable relative to each other. The arrangement is also provided with a non-ferromagnetic sensing gap and one or more sensing wires of the sensing element are arranged to the sensing gap in a transverse direction relative to the sensing direction. The magnetizing element generates a magnetic field between the sensor and the object so that line of flux of the magnetic field pass through the sensing gap. Further, the object is of hysteric ferromagnetic material at least at the sensing point.

In the disclosed solution, electric voltage is induced in the sensing wire when the object moves, and the tangential velocity occurs. Electromagnetic induction is the production of an electromotive force (emf) across the sensing wire in a changing magnetic field. The electromotive force is measured in volts.

The induced electric voltage can be conducted to one or more control units wherein the received electric voltage can be analyzed, further processed and implemented. The control unit can be provided with one or more sensing algorithms or control programs executable in a processor of the control device.

The tangential velocity of the object causes movement in the magnetic field i.e., the magnetic field follows the movement of the object. Then the magnetic field deflects. The generated magnetic field intends to follow the movement of the object due to hysteresis.

According to an embodiment, the object comprises a round outer surface. Then the object is a rod or tubular piece with round outer circumference. Transmission mechanisms comprise typically rotating elements, such as axles and drive shafts, with rotationally symmetrical outer surfaces. Also, rock drilling components are rotationally symmetrical objects. Alternatively, there may be a curved surface only at the sensing point.

According to an embodiment, the object comprises one or more plane surfaces on its outer surface. Then the object can be any plane, a rectangular rod, or tubular piece with plane surfaces. Alternatively, there may be a plane surface only at the sensing point. In other words, the disclosed solution can be implemented also for sensing objects having other cross sectional shape than round or curved.

In other words, the tangential velocity can be defined for all surface shapes. Known general definition is that the tangent touches at a single point a curve or surface.

The sensing point, or a measuring point, means a location where the sensor is arranged and where the magnetic field between the sensing element of the sensor and the object is created.

A magnetic circuit formed by the magnetizing element of the sensor comprises two points where the magnetic field is formed between the sensor and the object. One of these two points is provided with the sensing element and this point, where the sensing element is located, is the sensing point.

According to an embodiment, the sensor may comprise a sensor body or supporting elements which are in contact with the surface of the object. However, the magnetizing element and the sensing element are not in contact with the object. Thus, the sensing principle is contactless even if some structural parts of the sensor are arranged to contact the object. It is possible to provide the sensor with slide bearing surfaces, for example.

According to an embodiment, the sensing element comprises several parallel sensing wires in the transverse direction relative to the sensing direction. The sensing wires are part of a coil having several turns of wires. At least part of the coil comprising the sensing wires is located in the sensing gap.

According to an embodiment, the coil provided with the sensing wires is located in the sensing gap. The sensor is surrounding the object and the coil is located in the sensing gap surrounding the object. The sensing gap may be an annular space inside which the coil is arranged.

According to an embodiment, part of the coil is arranged to the sensing gap and another part is located outside the sensing gap. The sensor is not surrounding the object, whereby the coil does not surround the object neither. The sensor and the coil can be arranged on one side or surface of the object.

According to an embodiment, the at least one magnetizing element is a permanent magnet. Permanent magnets radiate magnetic fields and do not require an outside source of magnetism. The magnets can be neodymium (NdFeB) magnets, which are the most powerful permanent magnets available.

According to an embodiment, the at least one magnetizing element is an electromagnet.

According to an embodiment, the at least one sensing wire is arranged to the sensing gap perpendicularly in relation to the sensing direction.

According to an embodiment, the at least one sensing wire is arranged to the sensing gap in a slightly angular orientation providing a projection to the sensing direction and having thereby an effective length for the sensing wire in the perpendicular direction.

According to an embodiment, the object is of magnetically hard material at least at the sensing point. The magnetically hard material has high coercivity. For example, alloy steels have high coercivities. Further, different heat treatments, such as quenching, and tempering, typically increase the coercivity. Coercivity is a measure of the ability of a ferromagnetic material to withstand an external magnetic field without becoming demagnetized.

The magnetically hard materials have strong hysteresis phenomena and this phenomena is implemented in the disclosed solution.

Ferromagnetic materials, when subjected to a temporary magnetic field, can exhibit a lag or delay in the demagnetization process due to the material from which they are made. This lag or delay of a magnetic material is known commonly as the magnetic hysteresis.

The entire object can be made of such magnetically hard material, or alternatively, the object comprises a limited sensing area which is provided with an element made of the magnetically hard material.

According to an embodiment, the sensor is surrounding the object.

According to an embodiment, the sensor is not surrounding the object. Then the sensor can be supported on the outer surface of the object by means of support pieces which may be rolls or slide elements, for example. The support means can allow the object to be rotated. Alternatively, there may be an external support system for holding the sensor at a constant distance from the object during the measuring process.

According to an embodiment, the arrangement comprises several sensors. Then it is possible to arrange two sensors on opposite sides of the object. A further possibility is to arrange three sensors evenly spaced around the object. An advantage of this embodiment is that possible transverse movements and vibrations of the object can be compensated in the sensing data.

According to an embodiment, the arrangement comprises several sensors arranged successively in the sensing direction. Then it is possible to gather sensing data from two or more sensors and to compare the sensing data. Since there is a distance between the two or more sensors, there is a time difference in the received sensing data and the time difference can be utilized for further analyzing the sensing data.

According to an embodiment, the sensing gap has a height (G) in a direction of a normal to a surface of the object and the sensing wire is arranged on a sensing plane in the sensing gap. Then the sensing wire is at a distance (h) from the surface of the object. Intensity of signal generated in the sensing wire is proportional to magnitude of the distance (h).

In other words, intensity of the signal is the greater the closer the sensing plane is located the surface of the object. The signal is voltage induced in the sensing wire.

Dependency of the intensity of the generated signal can be calculated in accordance with a mathematical formula (G - h)/G.

According to an embodiment, the sensing element is a coil having several turns of parallel wires and is arranged so that one section of the parallel wires are located in the sensing gap and another section is located outside the sensing gap. Then the coil is not surrounding the object. In the coil several parallel wires may be one above each other. The sensing plane can then be defined to be at a middle of the part of the coil which is located in the sensing gap. In other words, an average distance of the coil is implemented.

According to an embodiment, the sensing element is a coil having several turns of parallel wires and is arranged to surround the object. Then the entire coil is located in the sensing gap and may comprise several parallel wires one above each other. The sensing plane can then be defined to be at a middle of the coil. Also in this embodiment, an average distance of the coil is implemented.

According to an embodiment, the sensor is configured to sense particle velocity component of an elastic wave at least in one sensing direction.

In other words, the sensor senses the particle velocity component by means of which propagation of elastic waves in the object can be detected. Thus, the sensor can sense the particle velocity component which is directly proportional to the magnitude of the stress wave. In practice, the sensor provides inducted voltage which is proportional to magnitude of the stress wave. Elastic waves are also known as stress waves. The elastic waves can be divided into longitudinal and transversal waves, p-waves and s-waves, respectively. Here they are called axial waves and torque waves.

The elastic wave comprises the two components wherein the stress component indicates stress in a cross section of the object and the particle velocity component indicates velocity of the cross section.

The stress component of the elastic wave can be calculated on the basis of the particle velocity component when material characteristics of the object are known.

According to an embodiment, in case of the axial wave, the stress at the cross section $\sigma$ can be calculated using the following formula:

$$\sigma = c_p \rho v$$

wherein

$c_p$ is propagation velocity of the axial wave in material ($C_{steel}$ = 5170 m/s),
$\rho$ is material density ($\rho_{steel}$ = 7850 kg/m³)
v is tangential velocity in axial direction representing axial particle velocity in a cross section and is determined by the disclosed sensor.

According to an embodiment, in case of the shear wave i.e., the torque wave, the torque at the cross section T can be calculated using the following formulas:

$$T = c_s \rho J \omega \qquad (5)$$

$$\omega = v_t / r \qquad (6)$$

wherein

$C_s$ is propagation velocity of the torque wave in material ($C_{steel}$ = 3210 m/s),
$\rho$ is material density ($\rho_{steel}$ = 7850 kg/m3)
J is the polar moment of inertia of the shaft, vt is the tangential velocity in rotational direction of the cross section and r is the radius of the shaft.

According to an embodiment, the object is provided at the sensing point with at least one protrusion on the surface facing towards the sensing element and forming a geometrical discontinuity wherein a distance between the surface of the object and the sensing element is locally decreased. The protrusion causes a geometrical discontinuity in the direction of movement of the object.

In other words, the protrusion decreases locally distance between the surface of the object and the sensing element in the sensing gap, and the magnetic field intends to pass through the sensing gap where the height of the sensing gap is the smallest. It can be considered that the sensor has an improved capability to detect the movement of the geometrical discontinuity point.

An advantage is that due to the intentionally formed discontinuation in the sensing gap sensitivity of the sensor can be improved and the sensor can produce sensing data also when movements of the object are very small.

The protrusion or shoulder is for sensing purposes and is located only at a limited axial length at the sensing area. Orientation and configuration of the protrusion is dependent on the direction of movement. The solution can be implemented for reciprocating movement wherein the protrusion remains inside the sensing gap.

According to an embodiment, the sensor comprises at least two magnetizing elements arranged to form two separate magnetizing circuits trough a common sensing gap. The magnetizing elements are arranged symmetrically in relation to the sensing element located in the sensing gap.

In other words, directions of magnetic field lines are the same in the two separate magnetizing circuits passing through the common sensing gap. This is due to the symmetrically arranged magnetizing elements wherein magnetic north poles are directed to opposite directions, as well as magnetic south poles. The magnetizing elements can be considered to be mirror symmetrically arranged.

An advantage of this embodiment is that two or more magnetizing elements can utilize the same sensing gap whereby the structure can be made compact. Further, the use of several magnetizing elements intensifies the generated magnetic field passing through the sensing gap and thereby also intensifies gathered sensing signals. Signal amplifiers are not necessarily needed.

According to an alternative embodiment, there are two sensing elements per one magnetizing element. The magnetizing element is located in a middle and on opposing sides of the magnetizing element are two sensing gaps provided with the sensing wires. An advantage is that the structure can be compact, and it allows different ways to implement the received sensing signals. It is possible to series connect the two sensing elements whereby measuring sensitivity of the sensor can be increased. When the sensing elements are utilized separately, then two different sensing results are provided and by analyzing and comparing them valuable data can be gathered.

According to an embodiment, the at least one magnetizing element is a rotationally symmetrical piece. In other words, the magnetizing element may have a shape of a disk provided with an outer diameter, an inner diameter and two opposing flank surfaces. Magnetic poles, i.e., a north pole and a south pole are located on the opposing flank surfaces. An advantage of this embodiment is that the disk shaped magnetizing elements are relatively easy to manufacture and to support to the structure of the sensor.

According to an embodiment, the sensor comprises several separate magnetizing elements with rod-like configuration and being arranged in a non-ferromagnetic body having a shape of a disk with an inner diameter, an outer diameter, a first flank surface and a second flank surface. North poles of the magnetizing elements are facing towards a first flank surface and south poles are facing towards a second flank surface. In other words, the several separate magnetic rods provide the disk with magnetic properties and poles. An advantage of this embodiment is that different type of magnetizing elements can be formed in a relatively simple manner by utilizing standard magnetic rods with desired cross-sectional shapes and dimensions. Number of the rods in the disk can be easily varied.

According to an embodiment, the body comprises several parallel spaces evenly spaced around the disk shaped structure. Then several separate magnetizing elements are mounted inside the spaces. The magnetizing elements can then be simply pushed inside the spaces.

According to an embodiment, the body supporting the several separate magnetizing elements is made of polymer material. Alternatively, the body can be made of composite material or non-ferromagnetic metal material, such as aluminum.

According to an embodiment, the sensor comprises at least two sensing elements configured to sense the tangential velocities in two different sensing directions which are perpendicular in relation to each other. In other words, the sensor is provided with a first sensing element for sensing tangential velocity in an axial direction of the object, and a second sensing element for sensing tangential velocity in a rotation direction of the object.

According to an embodiment, the mentioned the first and second sensing elements are surrounding the object.

According to an embodiment, the first and second sensing elements are not surrounding the object.

According to an embodiment, the sensor comprises a first coil surrounding the object perpendicularly and a second coil surrounding the first coil perpendicularly. Then the first coil is able to sense the tangential velocity in an axial direction of the object and the second coil is able to sense the tangential velocity in a rotation direction of the object. In other words, the sensor comprises two coils having transverse windings relative to each other.

According to an embodiment, the object to be measured is a rock drilling tool component connected to a rock drilling machine and the sensor is configured to measure stress waves propagating in the rock drilling component. In other words, the sensor measures stress waves during a rock drilling process wherein the rock drilling tool components are subjected to different kind of stress waves depending on the drilling techniques implemented.

An advantage of the disclosed solution in rock drilling is that the sensor is contactless and can thereby be used to measure rotating drilling tools and components. Further, structure of the sensor can also be made robust to tolerate harsh conditions at drilling sites. In the rock drilling there occurs rapid movement changes when axial and rotational impact pulses are generated. The disclosed sensing principle utilizing the hysteresis suits especially well for sensing such rapid changes in movements of the examined drilling tools and components.

According to an embodiment, the rock drilling tool component being measured is a shank adapter by means of which a rock drilling tool is connected to a rock drilling machine.

According to an embodiment, the rock drilling tool component being measured is a rock drilling tool, such as a drilling tube.

According to an embodiment, the rock drilling tool component is a shank adapter or a rock drilling tool of a top hammer rock drilling machine comprising an impact device and a rotating device. There may be one or more sensors for measuring axial stress waves and rotational stress waves.

According to an embodiment, the rock drilling tool component is a shank adapter or a rock drilling tool of a rotary or down-the-hole (DTH) rock drilling machine comprising a rotating head. There may be one or more sensors for measuring stress waves.

According to an embodiment, the disclosed solution is also directed to a rock drilling unit for drilling drill holes to a rock surface. The rock drilling unit comprises: a feed beam; a rock drilling machine mounted movably on the feed beam and comprising at least a rotating device for rotating a rock drilling tool component comprising at least a shank adapter and at least one removable drilling tube; a feed device for moving the rock drilling machine axially in a drilling direction and reverse direction; and an arrangement for measuring loadings directed to the rock drilling tool component. The mentioned arrangement is in accordance with the features and embodiments disclosed in this document.

The rock drilling unit may comprise a top hammer rock drilling machine comprising an impact device and a rotating device movable on the feed beam. Alternatively, the rock drilling machine may be a rotation device rotating a rotation head in a rotary or down-the-hole (DTH) rock drilling machine. In the DTH application there is an impact device at an opposite end of a drilling tube.

According to an embodiment, the disclosed solution is also directed to a method of sensing at a sensing point tangential velocity of a surface of an object to be measured. The method comprises providing the sensing point with sensing means configured to measure the tangential velocity contactless in at least one sensing direction; using as the sensing means at least one sensor comprising at least one magnetizing element and at least one sensing element; providing a non-ferromagnetic sensing gap between the sensor and the object; arranging at least one sensing wire of the sensing element to the sensing gap in a transverse direction relative to the sensing direction; generating a magnetic field between the sensor and the object by means of the magnetizing element and arranging lines of flux of the magnetic field to pass through the sensing gap; and sensing electric voltage induced in the sensing wire when the object, which is at least at the sensing point of hysteric ferromagnetic material, executes a rapid change in movement in the sensing direction in relation to the sensor and thereby causes the magnetic field to deflect due to hysteresis.

According to an embodiment, the method further comprises: providing at least one control unit with data on the sensed induced voltage for determining particle velocity components of elastic waves propagating in the object; and calculating in the control unit magnitude of stress wave components on the basis of the determined particle velocity components and input material properties of the object.

According to an embodiment, the method further comprises: implementing the sensing in rock drilling whereby a rock drilling tool component is serving as the object; sensing the tangential velocity at least in one of the following directions of the rock drilling tool component: an axial direction, a rotation direction; and calculating in the control unit magnitudes of at least one of the following stress waves propagating in the rock drilling tool component: axial stress waves, rotational stress.

The above disclosed embodiments may be combined in order to form suitable solutions having those of the above features that are needed.

**Brief description of the figures**

Some embodiments are described in more detail in the accompanying drawings, in which

Figures 1a and 1b are schematic views showing movements of sensing wires relative to magnetic fields,

Figure 2 is a schematic view of a magnetic field and its deflection,

Figure 3 is a schematic view of a sensing gap provided with sensing wires,

Figure 4 is a schematic view of a sensing gap provided with a protrusion,

Figures 5a and 5b are schematic views of a sensor comprising two permanent magnets and one sensing coil arranged to surround a rotation symmetrical object,

Figures 6a and 6b are schematic views of a sensor comprising one permanent magnet and two sensing coils arranged to surround a rotation symmetrical object,

Figures 7a and 7b are schematic views of a magnetizing element assembly comprising several separate and rod-like magnetizing elements,

Figures 8a - 8c are schematic views of a sensor which is not surrounding an object to be measured,

Figure 9 is a schematic view of a sensor comprising three sensing coils not surrounding an object to be measured,

Figures 10a and 10b are schematic views of sensing arrangements seen in longitudinal directions of objects being measured and comprising several sensors arranged around the objects,

Figures 11a and 11b are schematic views of a sensor comprising rolls for supporting the sensor on a surface of an object,

Figures 12a and 12b are schematic views of a sensor sensing tangential velocity in a rotational direction and comprising one sensing element and two magnetizing elements not surrounding the object,

Figures 13a and 13b are schematic views of a sensor sensing tangential velocity in a rotational direction and comprising two sensing elements and two magnetizing elements not surrounding the object,

Figure 14 is a schematic view of a sensor sensing tangential velocity in a rotational direction and comprising rolls for supporting the sensor on a surface of an object,

Figure 15 is a schematic view of a sensor sensing tangential velocities in axial and rotational directions and comprising rolls for supporting the sensor on a surface of an object,

Figures 16a and 16b are schematic views of a sensor comprising two coils wherein a coil sensing tangential velocities in rotational directions is wound to surround a coil sensing tangential velocities in axial directions,

Figures 16c and 16d are schematic views of a sensor comprising several coils connected in series and arranged to sense tangential velocities in rotational directions and surrounding a coil sensing tangential velocities in axial directions,

Figure 17 is a schematic view of a rock drilling rig comprising a rock drilling unit,

Figure 18 is a schematic view of a rock drilling unit for DTH-drilling,

Figures 19a and 19b are schematic views of a shank adapter of a rock drilling machine and a sensor arranged to surround the shank adapter,

Figures 20a - 20c are schematic and cross-sectional views of some sensor arrangements surrounding shank adapters,
Figure 21 is a schematic view of axial and rotational stress waves propagating in a drilling tool in DTH-drilling,
Figure 22 is a schematic view of axial and rotational stress waves propagating in a drilling tool in rotary drilling, and
Figure 23 is a schematic and cross-sectional view of an arrangement suitable for calibrating a sensor.

For the sake of clarity, the figures show some embodiments of the disclosed solution in a simplified manner. In the figures, like reference numerals identify like elements.

**Detailed description of some embodiments**

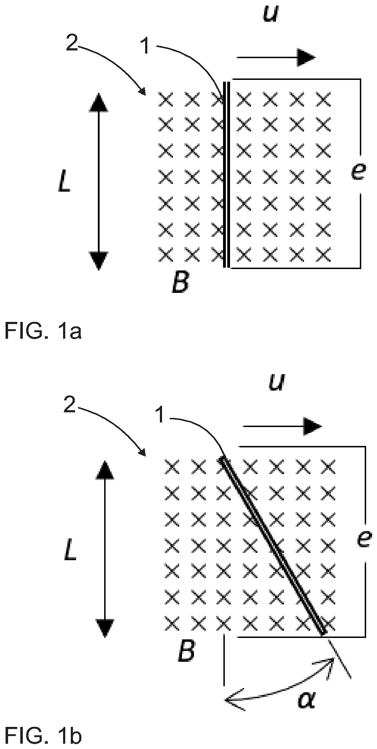

Figures 1a - 4 disclose theoretical basis for sensing tangential velocities of surfaces of different objects.

In Figure 1a a wire 1 moves from left to right perpendicularly to a magnetic field 2. Electric voltage e is induced to the wire 1 and magnitude of the voltage e is directly proportional to magnetic density B of the magnetic field 2, effective length L of the wire 1 in the magnetic field 2, and velocity u of the wire 1 relative to the magnetic field 2.

Magnitude of the induced voltage e can be calculated as follows:
e=LBu
In Figure 1b the wire 1 is in a slanted position relative to the magnetic field 2 and direction of movement of the wire 1. The effective length L of the wire 1 in the magnetic field 2 can be calculated when an angle $\alpha$ of the slant is known. Thus, the effective length L is the length of the wire 1 being perpendicular to the magnetic field 2 and to the direction of the movement.

The voltage e is also induced when the magnetic field 2 moves and the wire 1 is set immovable. This feature is implemented in the sensing arrangement disclosed in this document. Then the immovable wire 1 is a sensing wire and the voltage e is a produced sensing signal representing movement velocity of an object being measured.

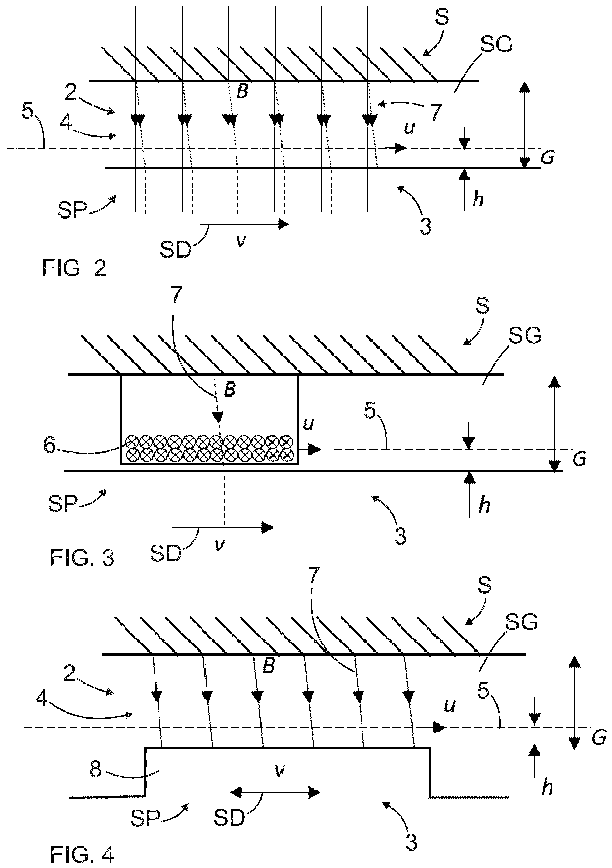

Figure 2 discloses a magnetic field 2 between an immovable sensor S and a moving object 3. The sensor S is provided with magnetizing means for generating a magnetic field 2 between the sensor S and the object 3. The object 3 moves in a sensing direction SD with velocity v. The object 3 is made of hysteric ferromagnetic material, at least at a sensing point SP, whereby the magnetic field 2 intends to follow the movement of the object 3. When the magnetic field 2 moves together with the object 2, then deflection 4 of the magnetic field 2 occurs, as it is shown in Figure 2 with broken lines. Typical machine parts and components are of steel and alloy steel materials which are magnetically hard materials and have thereby strong hysteresis phenomena. So, when rapid movement changes occur in the sensing direction SD between the sensor S and the object 3, the magnetic field 2 follows the movement of the object 3. When the movement of the object 3 is slow the magnetic field 2 does not follow the movement. When a sensing wire is arranged to a sensing gap SG between the sensor S and the moving object 3, then electric voltage is induced in the sensing wire due to the moving magnetic field 2. The hysteresis phenomena and the movement of the magnetic field 2 in rapid movement changes are implemented in the solution disclosed in this document.

Figure 2 further discloses that velocity u of the moving magnetic field 2 is dependent on the velocity v of the object 3 and location of the sensing wire in the sensing gap SG. The sensing gap SG has a height G in a direction of a normal to a surface of the object 3. The sensing wire can be placed on a sensing plane 5 at a distance h from a surface of the object 3 because the sensing is contactless.

Then movement velocity u of the magnetic field 2 following the object 3 and having velocity v can be calculated as follows:

$$u = kv$$

$$k = \frac{G - h}{G}$$

Figure 3 discloses that a sensing gap SG is provided with several parallel sensing wires 6. Then voltage is induced in the sensing wires 6 when an object 3 moves and causes a magnetic field 2 to follow the movement in a sensing direction SD. There may be several layers of the sensing wires 6 and then a sensing plane 5 can be defined to an average distance h from a surface of the object 3. The above disclosed formulas can be used to calculate velocity u of the magnetic field 2.

Figures 2 and 3 further disclose that lines of flux 7 of the magnetic field 2 pass through the sensing gap SG and deflect 4 due to the movement of the magnetic field.

The sensor can transmit data of the sensed voltage e induced in the wires to a control unit wherein it is possible to calculate velocity u of the magnetic field 2.

As an example of this the following formula can be implemented:

$$e = 2\pi r_c N B u = 2\pi r_c N B k v$$

wherein,

the object is rotationally symmetrical piece,
the sensor comprises a sensing coil provided with several sensing wires and surrounds the object,

the magnetic field is in a radial direction of the object,
N is number of turns of sensing wires in the sensing coil,
B is magnetic density of the magnetic field,
$r_c$ is distance of the sensing coil from central axis of the object.

For example, when $r_c$ is 20 mm, N is 50, B is 0.1 Tand u is 3.0 m/s, then voltage induced to the sensing coil is 1.88 V.

Figure 4 discloses that there can be a protrusion 8 in a sensing gap SG. The protrusion 8 is formed on a surface of an object 3. Purpose of the protrusion 8 is form a geometrical discontinuity and to thereby enhance at a sensing point SP the above disclosed phenomena wherein a magnetic field 2 follows rapid movement of the object 3. The protrusion 8 decreases height G of the sensing gap SG. The magnetic field 2 always selects the shortest and easiest way to pass through the sensing gap SG and thereby passes through at the location of the protrusion 8. Sensing wires or a sensing coil can be arranged on a sensing plane 5 so that there induces voltage which is proportional to velocity v of the object 3.

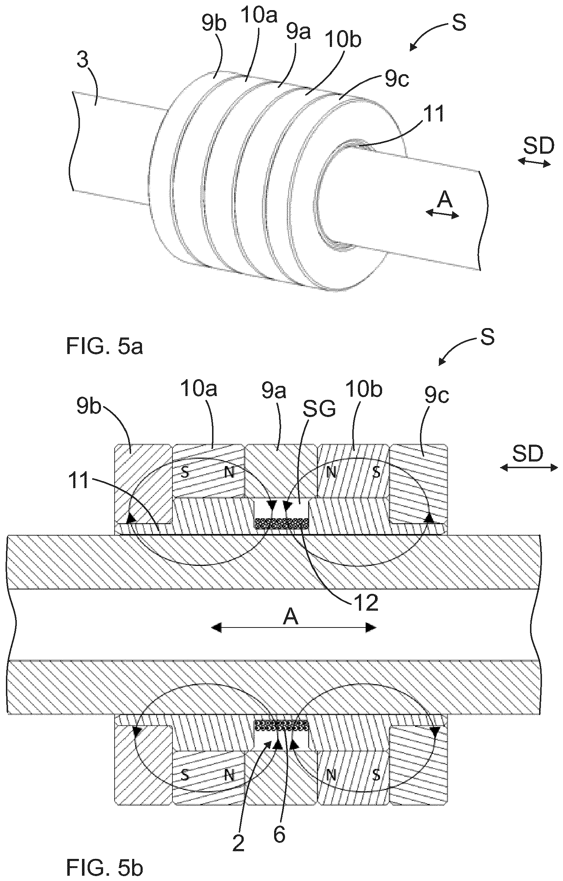

Figures 5a and 5b disclose a sensor S mounted immovably around an object 3 having a round outer surface. The object 3 is moved in axial direction A and this movement can be sensed by the sensor S. The object 3 can be rotated around its central axis. The sensor S comprises three body parts 9a - 9c which are disk shaped and made of ferromagnetic material. At a middle portion of the sensor S there is a middle body part 9a and at the axial ends of the sensor S there are end body parts 9b and 9c. Between the middle body part 9a and the end body parts 9b and 9c there are disk shaped magnetizing elements 10a and 10b. The magnetizing elements 10a, 10b have their magnetic poles at their axial end surfaces and magnetizing elements 10a, 10b are arranged so that similar magnetic poles are facing each other. Closest to the outer surface of the object is a coil body part 11 which is made on non-ferromagnetic material, such as polymeric material or aluminium. A sensing coil 12 comprising several sensing wires 6 is mounted to a sensing gap SG formed between the object 3 and the middle body part 9a. The sensing gap SG comprises material of the coil body part 11 and air space. The coil body part 11 keeps the sensing coil 12 at a designed distance from the object 3 and it can also provide support for the body parts 9a - 9c and the magnetizing elements 10a, 10b. The coil body part 11 can be made of material having good slide bearing properties, whereby it can serve as a slide bear between the object 3 and the sensor S.

The magnetizing elements 10a and 10b are permanent magnets which together generate a magnetic field 2 which is rotational symmetric in relation to the object 3 and symmetric in relation to the middle body part 9a. The generated magnetic field 2 can also connect the disclosed sensor components together in the sensor assembly so that no separate fastening means are not necessarily needed. This way the structure can be simple and easy to manufacture and assemble.

The sensor S disclosed in Figures 5a and 5b is capable to sense tangential velocity in the axial direction A since the sensing wires 6 of the sensing coil 12 are arranged perpendicularly in relation to the axial movement A of the object. Thus, there is one sensing direction SD.

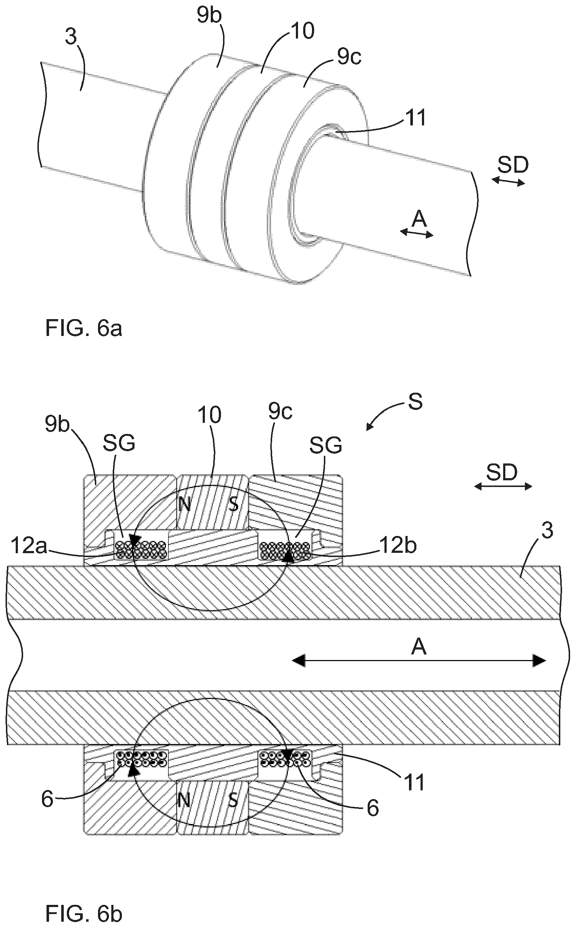

Figures 6a and 6b disclose a sensor S which differs from the sensor shown in Figures 5a and 5b in that there is one magnetizing element 10 and two sensing coils 12a and 12b. Then sensor S comprises two sensing gaps SG inside which the two sensing coils 12a and 12b with several sensing wires 6 are arranged. In this solution one magnetizing element 10 generates magnetic fields 2 through the two sensing gaps SG whereas in the sensor according to Figures 5a and 5b two magnetizing elements 10a, 10b generate together one magnetic field through one sensing gap SG.

Further, a body structure in Figures 6a and 6b is different since there is no middle body part but only two end body parts 9b and 9c between which is the magnetizing element 10. Due to the different body structure and decreased number of magnetizing elements the structure of the sensor S is shorter in axial direction when compared to the sensor of Figures 5a and 5b.

The sensing coils 12a and 12b can be series connected for increasing sensing capabilities of the sensor S, or alternatively, sensing results gathered from the two sensing coils 12a, 12b can be utilized separately for providing data on propagation of elastic waves in the object, for example.

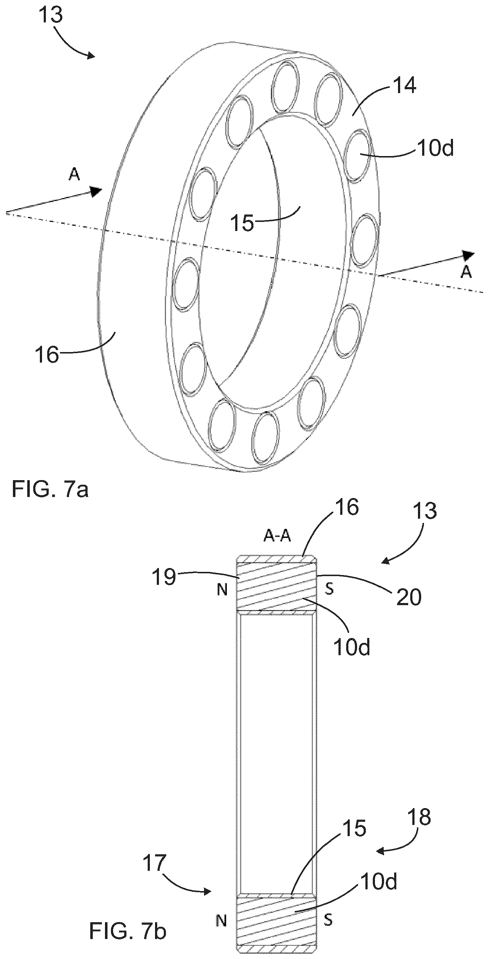

Figures 7a and 7b disclose a magnetizing element assembly 13 structure of which differs from the solid one-piece magnetizing elements disclosed in the previous Figures 5a - 6b. The magnetizing element assembly 13 comprises a non-ferromagnetic body 14 having a shape of a disk with an inner diameter 15, an outer diameter 16, a first flank surface 17 and a second flank surface 18. There are several separate magnetizing elements 10d with rod-like configuration and being arranged in spaces provided in the body 14. North poles 19 of the magnetizing elements 10d are facing towards the first flank surface 17 and south poles 20 are facing towards the second flank surface 18. The solid onepiece magnetizing elements disclosed for example in Figures 5a - 6b can be substituted by the disclosed magnetizing element assembly 13.

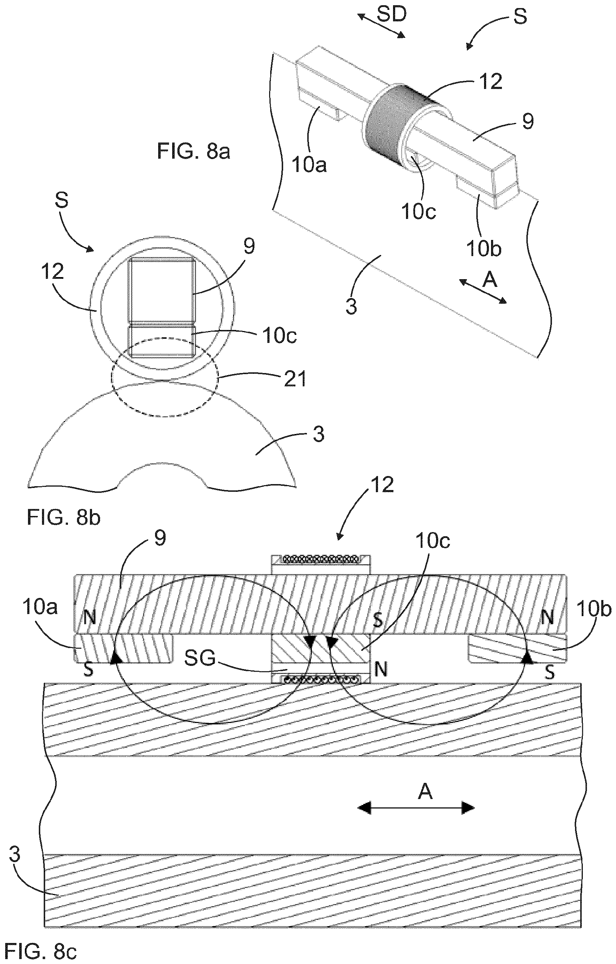

Figures 8a - 8c disclose an alternative type of a sensor S which is not surrounding an object 3 to be measured. Instead, the sensor S is arranged on one side of the object 3 and can sense axial movement A of the object 3. The sensor S comprises a ferromagnetic body part 9 and three magnetizing elements 10a - 10c arranged between the body part 9 and the object 3. As can be seen, polarities of the magnetizing elements 10a and 10b at the ends of the body part 9 are different than in a magnetizing element 10c at a middle part. A sensing coil 12 is surrounding the magnetizing element 10c and the body part 9 in the middle part of the sensor S. Then only part of the sensing coil 12 is located in a sensing gap SG and acts as an active sensing part 21 indicated by an oval in Figure 8b. The disclosed sensor S can be implemented for sensing tangential velocities of objects 3 having any shape.

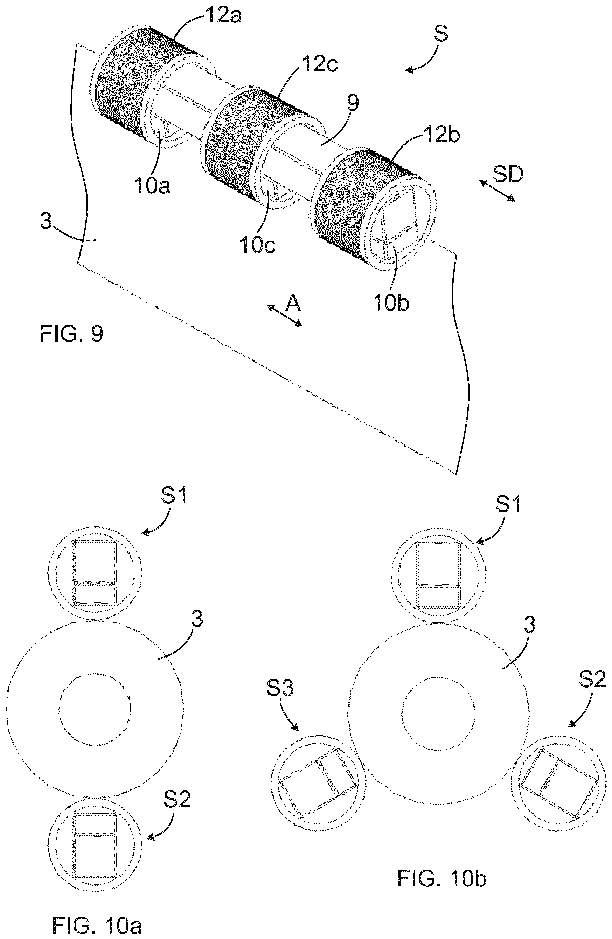

Figure 9 discloses a sensor S which differs from the sensor shown in Figures 8a - 8c in that there are three sensing coils 12a - 12c instead of one single sensing coil 12 in the middle. The sensing coils 12a - 12c can be series connected to provide combined sensing data, or they can each provide separate sensing data.

Figures 10a and 10b disclose two sensing arrangements wherein several sensors S are arranged to sense tangential velocity of an object 3 in an axial direction. The sensors S can be of the type disclosed in Figures 8a - 9, for example. In Figure 10a there are two sensors S1 and S2 on opposite sides of the object 3, and in Figure 10b there are three sensors S1 - S3 evenly spaced around the object 3. These embodiments may be advantageous in situations when the object 3 being measured vibrates in a transverse direction.

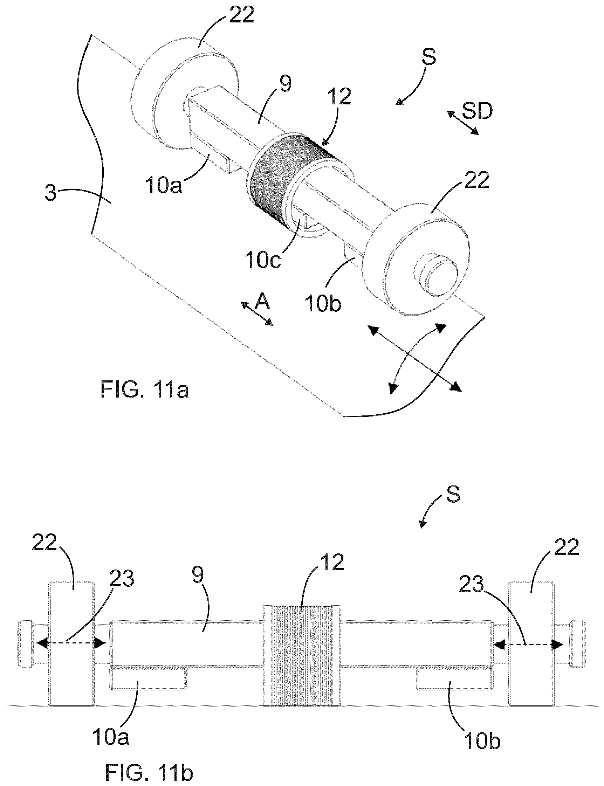

Figures 11a and 11b disclose a sensor S having a same basic structure as is disclosed in Figures 8a - 8c. However, a body part 9 of the sensor S is now provided with rolls 22 for supporting the sensor S on a surface of an object 3. By means of the rolls 22 sensing distance can be kept constant. The rolls 22 can slide axially in relation to the body part 9 when the object 3 moves in axial direction A. This sliding movement is shown by means of arrows 23. End portions of the body part 9 may comprise axle portions for the rolls 22. The rolls 22 also allow the object 3 to rotate.

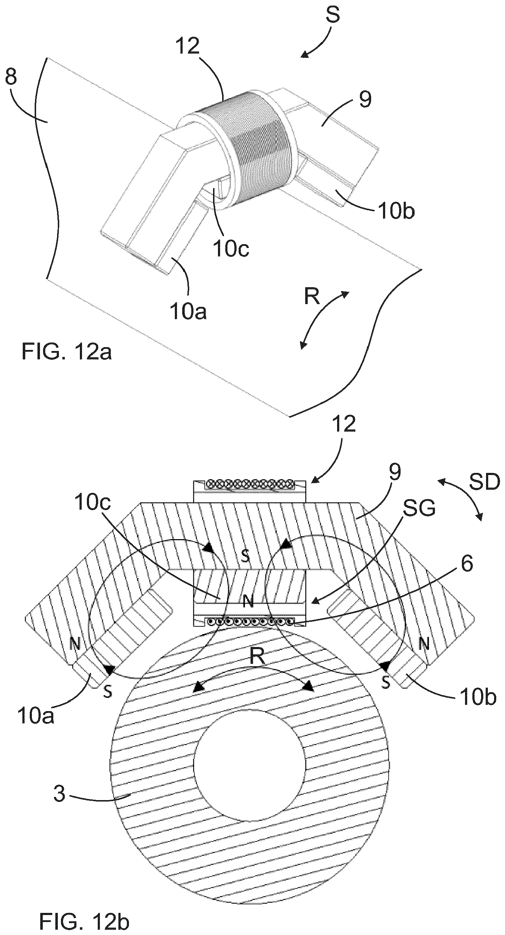

Figures 12a and 12b disclose a sensor S for sensing tangential velocity of an object in a rotation direction R. Thus, a sensing direction SD is transverse to the axially directed sensing direction shown in previous Figures 5a - 6b and 8a - 11b. Structure of the sensor S resembles the structure of the sensor disclosed in Figure 8 but now the sensor S is arranged in transverse direction relative to axial direction of the object 3. Further a body part 9 of the sensor S is bent to follow curved outer surface of the object 3. Sensing wires 6 of a sensing coil 12 are parallel with the object 3 and transverse to the sensing direction SD. Then the sensor S can sense tangential velocity in a rotation direction R.

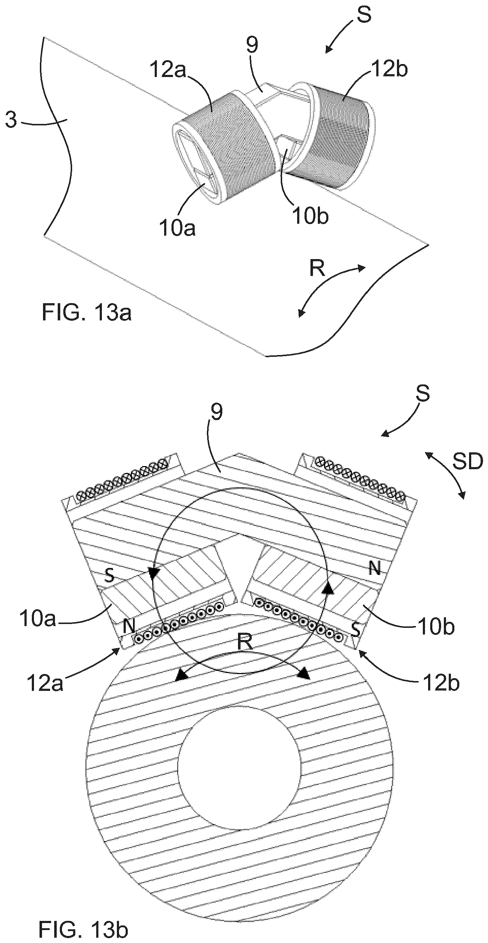

Figures 13a and 13b disclose a sensor which differs from the one shown in previous Figures 12a and 12b in that there are two sensing coils 12 and 12b, and further in that there are two magnetic elements 10a and 10b. Therefore, a body part 9 has also a slightly different design.

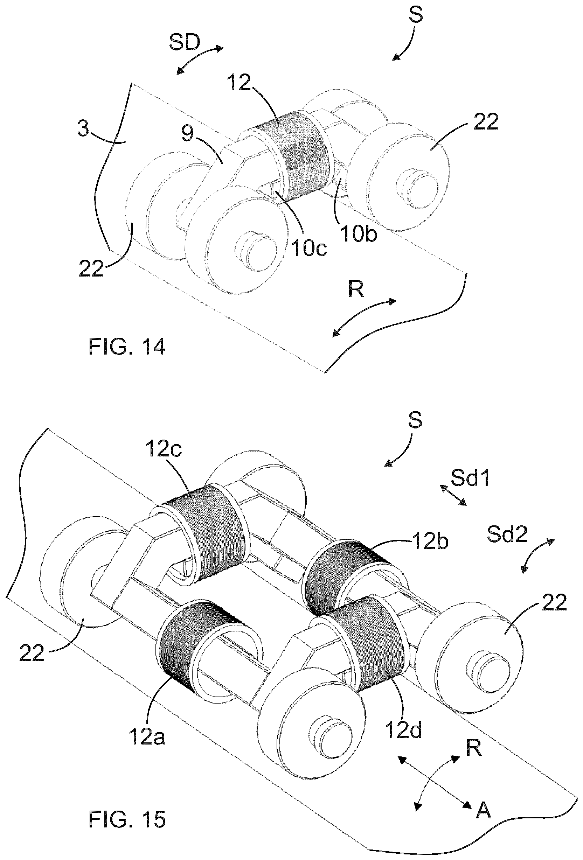

Figure 14 discloses a sensor S which has a substantially similar basic structure as the sensor disclosed in Figures 12a and 12b. However, a body part 9 is provided with rolls 22 for supporting the sensor S on an outer surface of an object 3. The sensor S can sense tangential velocity in a rotation direction R.

Figure 15 discloses a sensor S wherein basic sensor structures disclosed in Figures 11a, 11b and in Figure 14 are combined into one combination sensor S which is capable to sense tangential velocities in two sensing directions Sd1 and Sd2. There are two sensing coils 12a and 12b for sensing axial movement A and two sensing coils 12c and 12d for sensing rotation movement R.

The sensors disclosed in Figures 11a - 15 can be portable devices which can be arranged temporarily to desired positions to sense tangential velocities of an object.

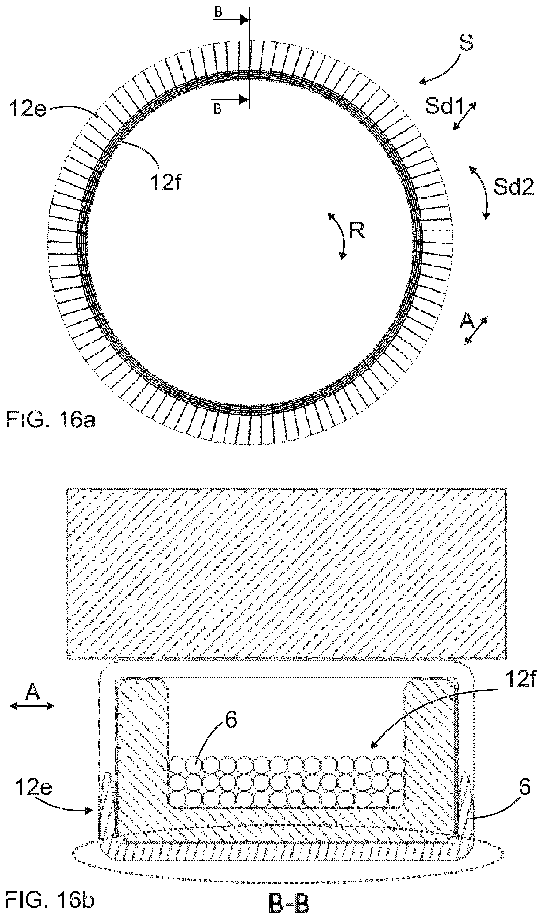

Figures 16a and 16b disclose another type of a combination sensor S for sensing tangential velocities in two transverse sensing directions Sd1 and Sd2. The sensor S comprises two sensing coils wherein a sensing coil 12e sensing tangential velocities in rotational directions R is wound to surround a sensing coil 12f sensing tangential velocities in axial directions A. Magnetizing elements implemented in the sensor S can be of the type shown in Figures 7a, 7b, for example.

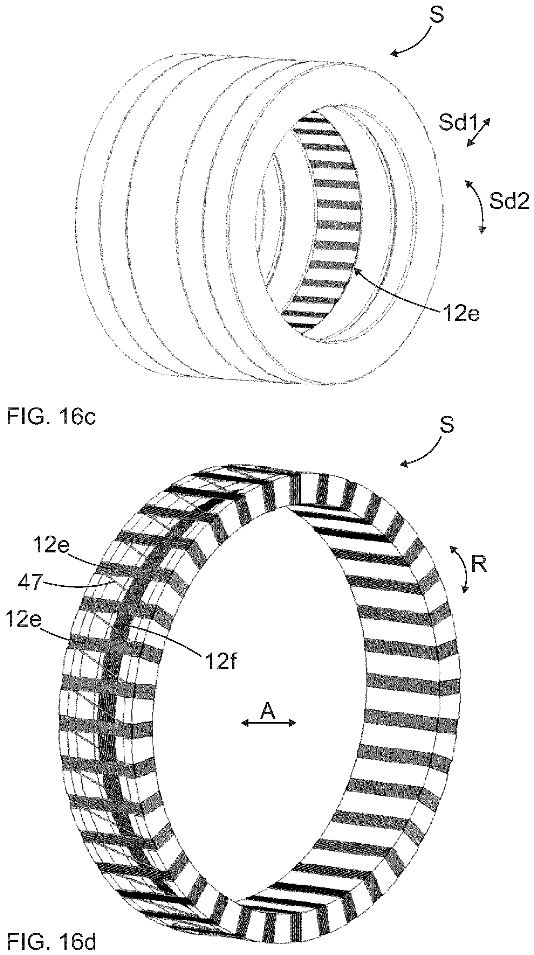

Figures 16c and 16d disclose a sensor S comprising several sensing coils 12e connected in series by means of conducting wires 47 and arranged to sense tangential velocities in rotational directions R and surrounding a sensing coil 12f sensing tangential velocities in axial directions A. The sensor S is thereby able sense tangential velocities in two transverse sensing directions Sd1 and Sd2.

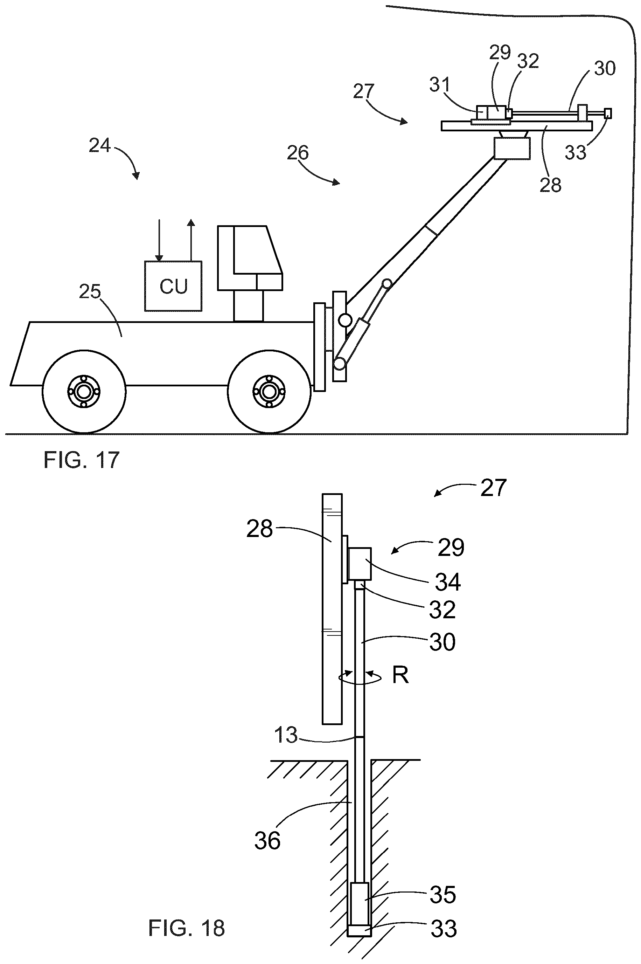

Figure 17 discloses a rock drilling rig 24 for drilling drill holes. The rock drilling rig 24 comprises a movable carrier 25 and one or more drilling booms 26 connected to the carrier 25. The drilling boom 26 is provided with a rock drilling unit 27 comprising a feed beam 28 and a rock drilling machine 29 supported movably on it. A rock drilling tool 30 is connectable to the rock drilling machine 29 and is rotated around drilling axis by means of a rotation device. At a distal end of the rock drilling tool 30 there is a drill bit 33. The rock drilling machine 29 is of a top hammer type and comprises an impact device 31 for generating impact pulses to the drilling tool 30. The rock drilling tool 30 is connected to a shank adapter 32 and rotation and impact pulses are transmitted via the shank adapter 32 to the rock drilling tool 30.

Figure 17 further discloses a control unit CU which can be provided with sensing data from sensors monitoring a drilling process and can generate control commands for controlling feeding, rotation and generation of impacts. The sensor disclosed in this document can be implemented for providing the control unit CU with data on particle velocities for determining elastic waves and stresses in examined rock drilling components, such as rock drilling tools 30 and shank adapters 32.

Figure 18 discloses a rock drilling unit 27 for DTH drilling wherein a rock drilling machine 29 comprises a rotation device 34 for rotating a rock drilling tool 30 connected to a shank adapter 32. The rock drilling machine 29 is movable on a feed beam 28 in drilling direction and reverse direction. The rock drilling machine 29 provided with the rotation device 33 and the shank adapter 32 may also be called as a rotation head since there is no impact device. Instead, there is an impact device 35 arranged at a distal end of the rock drilling tool 30 between a drill bit 33 and the rock drilling tool 30. During the drilling the impact device is inside a drill hole 36.

An alternative is that the drilling is rotary drilling without percussion. Then there is no impact device and the rock drilling tool 30 and the drill bit 33 are rotated by means of the rotation device 34 of the rock drilling machine 29. The rock drilling tool 30 and the shank adapter 32 can be monitored during the DTH and rotary drilling by means of sensors disclosed in this document. The monitoring may be continuous with fixed sensors, or the sensors can be mounted in place only when needed.

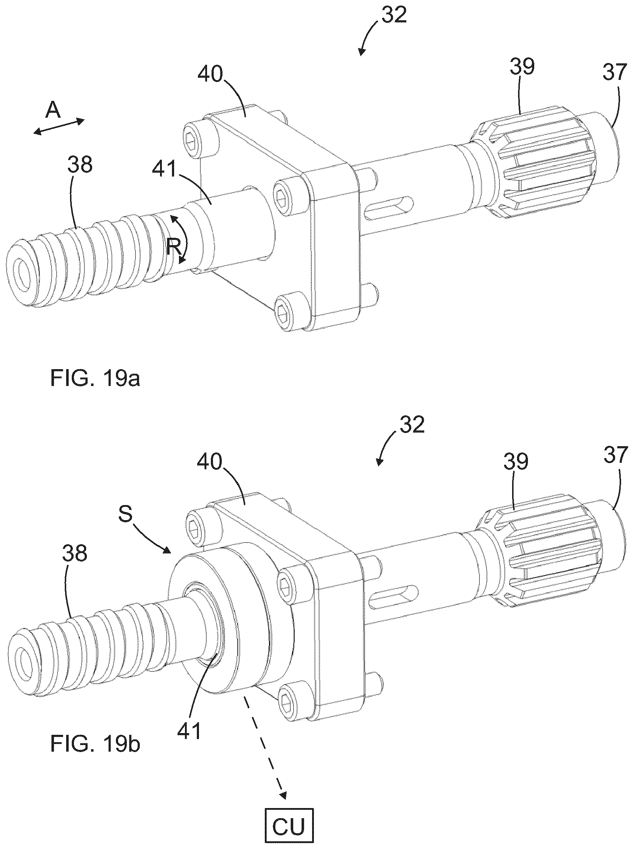

Figures 19a and 19b disclose a shank adapter 32 of a rock drilling machine and a sensor S arranged to surround the shank adapter 32. The disclosed shank adapter 32 is for top-hammer solution wherein impact pulses are transmitted from an impact device to an impact surface 37. At an opposite end portion of the shank adapter 32 there are connecting threads 38 for coupling rock drilling tools, such as drill tubes. There are also splines 39 for transmitting rotation from a rotation device via the shank adapter 32 to the rock drilling tool. Part of the shank adapter 32 is mounted into a flushing housing. At a front portion of a front cover 40 of the flushing housing the shank adapter 32 is provided with a cylindrical portion 41 for mounting the sensor S. This way the sensor S is relatively easy to mount to surround the shank adapter through which stresses occurring during drilling are passing. The sensor S is mounted immovably in relation to the shank adapter 32 and can be fastened to the front cover 40, or any other structure of the rock drilling machine or a cradle supporting it. The sensor S can sense tangential velocities in axial direction A and in rotation direction R and sensing data can be transmitted to a control unit CU by means of wired or wireless data communication.

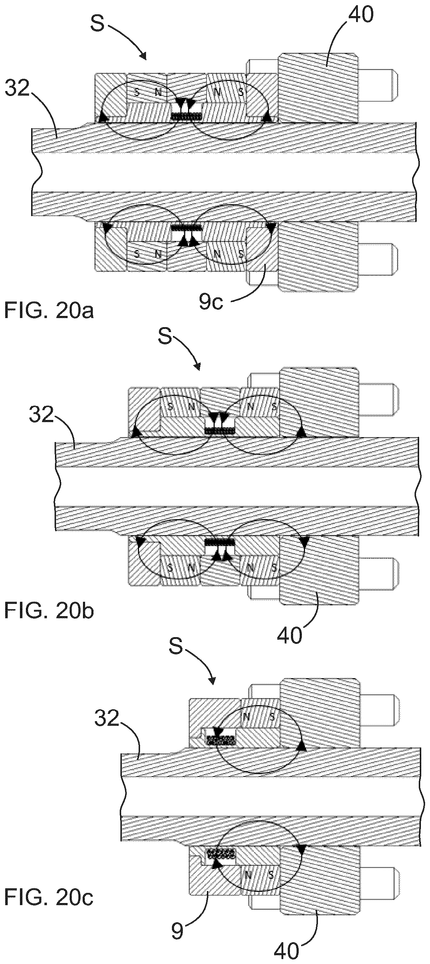

Figures 20a - 20c disclose three different sensors S surrounding shank adapters 32. In Figure 20a the sensor S is in accordance with the Figures 5a and 5b. In Figure 20b the structure of the sensor S shown in Figure 20a is simplified by removing a body part 9c closest to a front cover 40. Then the front cover 40 made of ferromagnetic material can be part of a magnetic circuit. In Figure 20c the sensor S is in accordance with the Figures 6a and 6b with the exception that there is only one body part 9 and a front cover 40 made of ferromagnetic material is serving as a part of a magnetic circuit. In Figures 20b and 20c the sensors S can be mounted to the front cover 40 by means of magnetic forces whereby no other fastening means are necessarily needed.

The sensors S shown in Figures 20a - 20c can sense tangential velocities in axial directions of the shank adapters 32. However, it possible to substitute the shown sensors S with combined sensors S shown in Figures 16a - 16c, whereby it is possible to sense tangential velocities in axial direction and in rotation direction. Magnetic

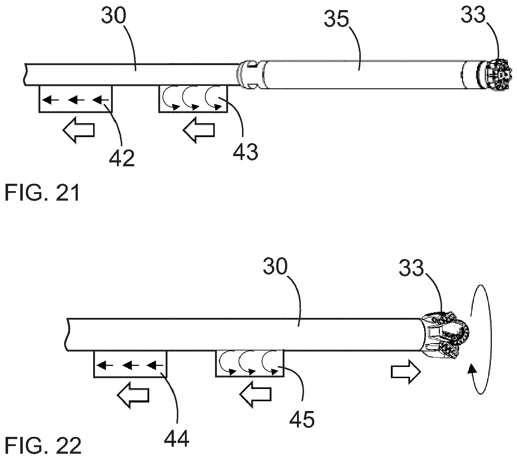

Figure 21 discloses propagation of stress waves in a DTH drilling equipment. An impact device 35 generates impact pulses to a drill bit 33 which transmits them to a rock surface. A rock drilling tool 30 is simultaneously rotated by means of a rotation device. Part of axial stress waves generated by the impact pulses are reflected back from the rock surface and are propagating towards a rotation head. This is the case when drilling to hard rock materials when the impact device 35 may be unable to utilize the reflected stress in its working cycle. In addition to reflected stress waves 42 there may be rotational stress waves 43 caused by the rotation of the drilling equipment and the fact that the rotation of the drill bit 30 is stopped during the impacts.

Figure 22 discloses propagation of stress waves in a rotary drilling equipment. A rock drilling tool 30 and a drill bit 33 are fed axially against a rock surface and simultaneously rotated. The drill bit 33 comprises protruding elements which crush rock material. Impulse forces are generated in the drill bit when the protruding elements are forced against the rock material. These impulse forces intend to push the drilling equipment against the feed direction and they also can decrease the rotation movement. Thereby axial stress waves 44 and rotation stress waves 45 are generated. The stress waves 44 and 45 can be determined when tangential velocities are sensed by means of the sensors disclosed in this document. The results of the sensing can be used to control drilling parameters, such as feed force and rotation, as well as information on quality of the drilled rock material is provided.

Figure 23 discloses a solution for calibrating a sensor S. An additional calibration sensor 46 for sensing magnetic density can be mounted between a body part 9 of the sensor S and an object 3. The additional calibration sensor 46 may be a linear hall effect sensor, for example.

The drawings and the related description are only intended to illustrate the idea of the invention. In its details, the invention may vary within the scope of the claims.

**Claims**

1. An arrangement for sensing at a sensing point (SP) tangential velocity of a surface of an object (3) to be measured;

   wherein the arrangement comprises at the sensing point (SP) at least one sensor (S) which is configured to measure the tangential velocity in at least one sensing direction (SD, Sd1, Sd2;
   **characterized in that**
   the at least one sensor (S) comprises at least one magnetizing element (10, 10a, 10b) and at least one sensing element which are both contactless in relation to the object (3) and are mounted immovably relative to each other;

the arrangement comprises a sensing gap (SG) which is of non-ferromagnetic material;

the sensing element comprises at least one sensing wire (6) arranged to the sensing gap (SG) in a transverse direction relative to the sensing direction (SD);

and wherein the at least one magnetizing element (10) is configured to generate a magnetic field (2) between the sensor (S) and the object (3) and wherein line of flux (7) of the magnetic field (2) is configured to pass through the sensing gap (SG);

and wherein the object (3) is of hysteric ferromagnetic material at least at the sensing point (SP).

2. The arrangement as claimed in claim 1, **characterized in that**

the sensing gap (SG) has a height (G) in a direction of a normal to a surface of the object (3);

the at least one sensing wire (6) is arranged on a sensing plane (5) in the sensing gap (SG) and is at a distance (h) from the surface of the object (3);

and wherein intensity of signal generated in the sensing wire (6) is proportional to magnitude of the distance (h).

3. The arrangement as claimed in claim 1 and 2, **characterized in that**
the sensor (S) is configured to sense particle velocity component of an elastic wave at least in one sensing direction (SD).

4. The arrangement as claimed in any one of the preceding claims 1 - 3, **characterized in that**
the object (3) is provided at the sensing point (SP) with at least one protrusion (8) on the surface facing towards the sensing element and forming a geometrical discontinuity wherein a distance between the surface of the object (3) and the sensing element is locally decreased.

5. The arrangement as claimed in any one of the preceding claims 1 - 4, **characterized in that**

the sensor (S) comprises at least two magnetizing elements (10a, 10b) arranged to form two separate magnetizing circuits trough a common sensing gap (SG);

and wherein the magnetizing elements (10a, 10b) are arranged symmetrically in relation to the sensing element located in the sensing gap (SG).

6. The arrangement as claimed in any one of the preceding claims 1 - 4, **characterized in that**
the sensor (S) comprises two sensing elements per one magnetizing element (10) and wherein the magnetizing element (10) is located in a middle and on opposing sides of the magnetizing element are located two sensing gaps (SG) provided with the sensing wires (6).

7. The arrangement as claimed in any one of the preceding claims 1 - 6, **characterized in that**
the at least one magnetizing element (10) is a rotationally symmetrical piece.

8. The arrangement as claimed in any one of the preceding claims 1 - 6, **characterized in that**

the sensor (S) comprises several separate magnetizing elements (10d) with rod-like configuration and being arranged in a non-ferromagnetic body (14) having a shape of a disk with an inner diameter (15), an outer diameter (16), a first flank surface (17) and a second flank surface (18);

and wherein north poles (19) of the magnetizing elements (10d) are facing towards a first flank surface (17) and south poles (20) are facing towards a second flank surface (18).

9. The arrangement as claimed in any one of the preceding claims 1 - 8, **characterized in that**
the sensor (S) comprises at least two sensing elements configured to sense the tangential velocities in two different sensing directions (Sd1, Sd2) which are perpendicular in relation to each other.

10. The arrangement as claimed in claim 9, **characterized in that**
the sensor (S) comprises a first coil (12f) surrounding the object perpendicularly and a second coil (12e) surrounding the first coil perpendicularly, whereby the first coil (12f) is configured to sense the tangential velocity in an axial direction (A) of the object (3) and the second coil (12e) is configured to sense the tangential velocity in a rotation direction (R) of the object (3).

11. The arrangement as claimed in any one of the preceding claims 1 - 10, **characterized in that**
the object (3) is a rock drilling tool component connected to a rock drilling machine (29) and the sensor (S) is configured to measure stress waves propagating in the rock drilling component.

12. A rock drilling unit (27) for drilling drill holes to a rock surface,
wherein the rock drilling unit (27) comprises:

a feed beam (28);
a rock drilling machine (29) mounted movably on the feed beam (28) and comprising at least a rotating device (34) for rotating a rock drilling tool component comprising at least a shank adapter (32) and at least one removable drilling tube (30);
a feed device for moving the rock drilling machine (29) axially in a drilling direction and reverse direction;
and an arrangement for measuring loadings directed to the rock drilling tool component;
**characterized in that**
the arrangement is in accordance with any one of the previous claims 1 - 11.

13. A method of sensing at a sensing point (SP) tangential velocity of a surface of an object (3) to be measured;

providing the sensing point (SP) with sensing means configured to measure the tangential velocity contactless in at least one sensing direction (SD);
**characterized by**
using as the sensing means at least one sensor (S) comprising at least one magnetizing element (10) and at least one sensing element;
providing a non-ferromagnetic sensing gap (SG) between the sensor (S) and the object (3);
arranging at least one sensing wire (6) of the sensing element to the sensing gap (SG) in a transverse direction relative to the sensing direction (SD);
generating a magnetic field (2) between the sensor (S) and the object (3) by means of the magnetizing element (10) and arranging lines of flux of the magnetic field (2) to pass through the sensing gap (SG);
and sensing electric voltage induced in the sensing wire (6) when the object (3), which is at least at the sensing point (SP) of hysteric ferromagnetic material, executes a rapid change in movement in the sensing direction (SD) in relation to the sensor (S) and thereby causes the magnetic field (2) to deflect due to hysteresis.

14. The method as claimed in claim 13, **characterized by**

providing at least one control unit (CU) with data on the sensed induced voltage for determining particle velocity components of elastic waves propagating in the object (3) ;
and calculating in the control unit (CU) magnitude of stress wave components on the basis of the determined particle velocity components and input material properties of the object (3) .

15. The method as claimed in claim 14, **characterized by**

implementing the sensing in rock drilling whereby a rock drilling tool component is serving as the object (3);
sensing the tangential velocity at least in one of the following directions of the rock drilling tool component: an axial direction (A), a rotation direction (R);
and calculating in the control unit (CU) magnitudes of at least one of the following stress waves propagating in the rock drilling tool component: axial stress waves, rotational stress waves.

FIG. 1a

FIG. 1b

FIG. 2

FIG. 3

FIG. 4

FIG. 5a

FIG. 5b

FIG. 6a

FIG. 6b

FIG. 7a

FIG. 7b

FIG. 8a

FIG. 8b

FIG. 8c

FIG. 9

FIG. 10a

FIG. 10b

EP 4 545 979 A1

FIG. 11a

FIG. 11b

20

FIG. 12a

FIG. 12b

FIG. 13a

FIG. 13b

FIG. 14

FIG. 15

FIG. 16a

FIG. 16b

B-B

S

Sd1

Sd2

12e

FIG. 16c

S

12e

47

12e

12f

R

A

FIG. 16d

FIG. 17

FIG. 18

FIG. 19a

FIG. 19b

FIG. 20a

FIG. 20b

FIG. 20c

FIG. 21

FIG. 22

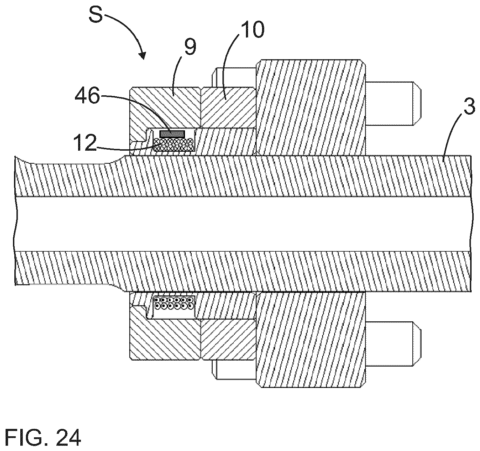

FIG. 24

| | Europäisches Patentamt European Patent Office Office européen des brevets | **EUROPEAN SEARCH REPORT** | Application Number EP 23 20 6296 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/028859 A1 (MAY LUTZ [DE]) 29 January 2015 (2015-01-29) | 1,2,4,5, 7,9,10, 13 | INV. G01P3/52 G01P3/50 |
| Y | * paragraphs [0006], [0070], [0071], [0075], [0101]; figures 1-22 * | 3,7-9, 11,12, 14,15 | ADD. G01L1/12 G01N27/72 |
| Y | EP 2 811 110 A1 (SANDVIK MINING & CONSTR OY [FI]) 10 December 2014 (2014-12-10) <br><br> * paragraphs [0044], [0048], [0052], [0053], [0057], [0060], [0063], [0069], [0070], [0077], [0088]; figures 1-13 * | 3,7,8, 11,12, 14,15 | |
| X | EP 3 450 988 A2 (NABTESCO CORP [JP]) 6 March 2019 (2019-03-06) * paragraph [0027]; figures 1-5 * | 1,6,13 | |
| Y | US 2014/184210 A1 (CAMPBELL LAM ARTHUR [US] ET AL) 3 July 2014 (2014-07-03) * paragraph [0030]; figures 1-6 * | 9 | TECHNICAL FIELDS SEARCHED (IPC) G01P G01L G01N |

The present search report has been drawn up for all claims

| Place of search | Date of completion of the search | Examiner |
|---|---|---|
| Munich | 10 April 2024 | Schwarz, Cornelia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 6296

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2024

| Patent document cited in search report | | Publication date | Patent family member(s) | | Publication date |
|---|---|---|---|---|---|
| US 2015028859 | A1 | 29-01-2015 | EP | 2707679 A1 | 19-03-2014 |
| | | | US | 2015028859 A1 | 29-01-2015 |
| | | | WO | 2012152720 A1 | 15-11-2012 |
| EP 2811110 | A1 | 10-12-2014 | AU | 2014202974 A1 | 15-01-2015 |
| | | | CN | 104236762 A | 24-12-2014 |
| | | | EP | 2811110 A1 | 10-12-2014 |
| | | | JP | 5767368 B2 | 19-08-2015 |
| | | | JP | 2014237217 A | 18-12-2014 |
| EP 3450988 | A2 | 06-03-2019 | CN | 109387665 A | 26-02-2019 |
| | | | EP | 3450988 A2 | 06-03-2019 |
| | | | JP | 7001386 B2 | 19-01-2022 |
| | | | JP | 2019032216 A | 28-02-2019 |
| US 2014184210 | A1 | 03-07-2014 | DK | 2938983 T3 | 18-10-2021 |
| | | | EP | 2938983 A2 | 04-11-2015 |
| | | | US | 2014184210 A1 | 03-07-2014 |
| | | | WO | 2014105363 A2 | 03-07-2014 |

EPO FORM P0459

For more details about this annex : see Official Journal of the European Patent Office, No. 12/82